(19) Europäisches Patentamt

European Patent Office

Office européen des brevets

(11) **EP 1 168 318 A2**

(12) # EUROPEAN PATENT APPLICATION

(43) Date of publication:
**02.01.2002 Bulletin 2002/01**

(51) Int Cl.$^7$: **G11B 7/24**, B29C 65/52
// G11B7/26

(21) Application number: **01115501.7**

(22) Date of filing: **27.06.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **30.06.2000 JP 2000200365**

(71) Applicant: **SONY CORPORATION
Tokyo (JP)**

(72) Inventors:
• **Yamasaki, Takeshi**
  **Shinagawa-ku, Tokyo (JP)**
• **Yukumoto, Tomomi**
  **Shinagawa-ku, Tokyo (JP)**
• **Kashiwagi, Toshiyuki**
  **Shinagawa-ku, Tokyo (JP)**

(74) Representative:
**Müller . Hoffmann & Partner Patentanwälte
Innere Wiener Strasse 17
81667 München (DE)**

(54) **Optical disc and method and apparatus for the preparation of the optical disc**

(57) An optical disc prepared so that, in bonding a disc substrate to a light transmitting sheet, an air bubble incidentally trapped on a bonding surface between the disc substrate and the light transmitting sheet may be reduced in size. An apparatus used for the preparation of the optical disc includes a sheet holding mechanism (32) for holding a light transmitting sheet (19) to be bonded to a signal recording surface (14) of a disc substrate (11), a disc holding mechanism (33) for holding the disc substrate (11) on the light transmitting sheet (19) held on the sheet holding mechanism (32) so that its signal recording surface (14) will face the light transmitting sheet (19), and a thrusting mechanism (34) for thrusting the disc substrate (11) held on the sheet holding mechanism (32) onto the light transmitting sheet (19). The thrusting mechanism (34) progressively thrusts the disc substrate (11) from its center side to its outer peripheral side to drive the air bubble towards the outer peripheral side.

**FIG.1**

## Description

BACKGROUND OF THE INVENTION

Field of the Invention

This invention relates to an optical disc having a disc substrate, on at least one surface of which is formed a signal recording surface, and a light transmitting sheet bonded to said disc substrate to form a light transmitting layer, and a method and apparatus for the preparation of the optical disc.

Description of Related Art

Among known optical discs, there is such a one in which a signal recording surface in the form of pits is formed on one surface of a disc substrate, a reflecting film is formed on the signal recording surface, and a protective film is formed on the reflective film, and in which a light beam is illuminated on the signal recording surface from the side disc substrate to effectuate recording and/or reproduction. In this sort of the optical disc, the light beam spot formed on converging the light beam with an objective lens, needs to be further reduced in size on the signal recording surface. The diameter of the light spot formed on this signal recording surface depends on the wavelength of the light beam and the numerical aperture of the objective lens. That is, with this sort of the optical disc, a light beam of a shorter wavelength and an objective lens of a larger numerical aperture are used to reduce the size of the light beam spot formed on the signal recording surface to enable high density recording.

In the Compact Disc, referred to below simply as CD, has pits formed in its signal recording surface, and is formed to have an overall thickness of 1.2 mm. This CD enables data of 650 MB to be recorded using a light beam of the wavelength of 780 nm and an objective lens with a numerical aperture (NA) of 0.45. On the other hand, the Digital Versatile Disc, referred to below simply as DVD, has two disc substrates 0.6 mm in thickness to give a thickness of 1.2 mm which is the same as the thickness of the CD. This DVD enables the recording of data on the order of 4.7 GB by employing a light beam with wavelength of 650 nm and an objective lens with the numerical aperture (NA) of 0.6. That is, the DVD uses a light beam of a shorter wavelength and an objective lens with a larger NA than those of the CD to enable high data recording density.

Meanwhile, the depth of focus of an objective lens is inversely proportionate to the square of NA of the objective lens, while being proportionate to the wavelength. Therefore, if desired to record data to a higher density on the optical disc, a light beam of a shorter wavelength and an objective lens of a higher NA need to be used, resulting in a shorter depth of focus.

On the other hand, the disc substrate is prepared by injection molding such that it is difficult o reduce its thickness further. If, in injection molding e.g., a disc substrate with a diameter of 120 mm, the transcription performance of the pits and grooves is to be realized to a level of that of the conventional optical disc, the thickness of 300 μm represents a limit. If desired to transcribe the pits and grooves to a higher accuracy in meeting with the tendency towards a high recording density, the thickness of 500 μm represents a limit. These limitation on the disc substrate thickness are imposed due to fluctuations in the fluidized state of the injection material, that is molten resin, injected into a metal mold, or to fluctuations in the rate of cooling of the metal molds used.

Consequently, even if a light beam of a shorter wavelength and an objective lens of a higher NA are used for recording data to a high density on the optical disc, the depth of focus is correspondingly reduced, however, it is difficult to reduce the thickness of the disc substrate operating as a light transmitting layer, an optical disc with a higher recording density cannot be produced.

The present Assignee has proposed an optical disc in which a signal recording surface is provided on at least one surface of the disc substrate and a light transmitting sheet is bonded to the signal recording surface to provide a light transmitting layer. In this optical disc, in contradistinction from the conventional optical disc for illuminating a light beam from the side disc substrate, the light beam is illuminated from the light transmitting sheet provided on the signal recording surface. In such optical disc, in which the light transmitting layer is formed by the light transmitting sheet, the light transmitting layer can be thinner in thickness than the light transmitting layer, that is the disc substrate, of the conventional optical disc. Consequently, with the present optical disc, data can be recorded and/or reproduced using a light beam of a shorter wavelength and an objective lens of a higher NA not possible with the optical disc employing the disc substrate as the light transmitting layer.

However, this sort of the optical disc suffers from a variety of problems in handling and preparation. As for handling, if, in bonding the light transmitting sheet to the disc substrate using an adhesive, the adhesive used is exuded at the outer rim or inner rim of the optical disc, contaminants, such as dust and dirt, become attached to the optical disc. On the other hand, a user gripping the optical disc touches the adhesive exuded from the outer and/or inner rim of the optical disc, so that the or she will feel disagreeable from the resulting tacky feeling.

As for the problem met in preparing the optical disc, when the thrusting pressure is applied progressively from one to the other direction to the light transmitting sheet constituting a light transmitting layer, using a roll, to bond the light transmitting sheet to the disc substrate, it may be an occurrence that a large-sized air bubble, such as one having a size of approximately 2 cm as measured along the track direction, is formed in a space between the disc substrate and the light transmitting sheet. The reason is that, in injection molding a disc substrate, the disc substrate undergoes warping in cooling, so that, if the light transmitting sheet is pressured against the disc substrate from one direction to the opposite direction, using the roll, an air bubble formed cannot traverse the space between the disc substrate and the light transmitting sheet. If, during bonding the light transmitting sheet to the disc substrate, a large-sized air bubble on the order of, for example, 2 cm, is produced between the disc substrate and the light transmitting sheet, the reflectance of the light beam, for example, is changed, such that the light beam cannot be converged on the signal recording surface, with the result that data cannot be recorded and/or reproduced correctly promptly due to the adverse effect thereby produced on focussing servo characteristics. In similar manner, if creases are produced in bonding the light transmitting sheet on the disc substrate, the light beam is changed e.g., in reflectance, with the result that correct and expeditious data recording and/or reproduction cannot be achieved.

If an air bubble, for example, is present in the light transmitting layer, such that the reflectance of the light beam is changed due to this air bubble, a light beam cannot be converged on the signal recording surface even in case the relative position between the signal recording surface and the objective lens is maintained at a constant value, thus producing defocussing. This defocussing can be recovered by focussing servo. However, the focussing servo is usually by a mechanical system comprising moving the objective lens by an actuator to control the distance between the objective lens and the signal recording surface. In general, the response time during which the servo operates is slower than the time during which a light spot travels over the air bubble, such that the light beam is not converged on the signal recording surface in an area where there exist the light spot. Moreover, should the effect of the air bubble become outstanding, the focussing servo is disengaged. In such state, the focussing servo pull-in needs to be repeated, thus significantly lowering the function of the system employing this optical disc. As described above, the air bubble, for example, formed in the light transmitting layer, affects the focussing servo characteristics significantly.

Such partial interruption of the signal recording and/or reproduction due to the air bubble is normally predicted at the system designing time point. In the optical disc, error correction is used for combatting this problem. This error correction intentionally introduces redundant signals into signals for recording in a regular pattern. With such error correction, original signals can be restored against the deterioration of the recorded and/or reproduced signals, by increasing the volume of redundant signals with respect to the volume of the signals for recording, despite the presence of the air bubble extending along the track direction. However, the recording capacity for the signals for recording is decreased in a volume corresponding to that of the redundant signals.

## SUMMARY OF THE INVENTION

It is therefore an object of the present invention to provide an optical disc in which tacky feeling caused by the adhesive exuded at the inner or outer rim may be eliminated to improve tractability and in which the size of the air bubble contained in the light transmitting layer may be reduced to 100 μm or less to improve the recording and/or reproducing characteristics.

In one aspect, the present invention provides an optical disc including a disc substrate including a center opening and having a signal recording surface on at least one surface thereof, and a light transmitting layer provided on the signal recording surface and including a light transmitting sheet and an adhesive layer for bonding the light transmitting sheet to the signal recording surface, in which the light transmitting layer has an outer diameter smaller than the outer diameter of the disc substrate and an inner diameter larger than the inner diameter of the disc substrate and in which signal recording and/or reproduction is made from the side light transmitting layer to the signal recording surface. That is, the optical disc is provided with steps in the inner and outer rim sides to improve the tractability.

In another aspect, the present invention provides an optical disc including a disc substrate including a center opening and having a signal recording surface on at least one surface thereof, and a light transmitting layer provided on the signal recording surface and including a light transmitting sheet and an adhesive layer for bonding the light transmitting sheet to the signal recording surface, in which the light transmitting layer including an air bubble has a size along the track direction of approximately 100 μm or less and in which signal recording and/or reproduction is made from the side light transmitting layer to the signal recording surface. The present optical disc, in which an air bubble incidentally trapped in the light transmitting layer is suppressed in size to approximately 100 μm or less along the track direction, may be improved in recording and/or reproducing characteristics.

In still another aspect, the present invention provides an apparatus for the preparation of an optical disc including a sheet holding mechanism for holding a light transmitting sheet which is to be bonded to a signal recording surface provided on at least one surface of a disc substrate, a disc holding mechanism for holding the disc substrate on the light transmitting sheet held on the sheet holding mechanism so that the signal recording surface will face the light transmitting layer and a thrusting mechanism for thrusting the disc substrate held on the disc holding mechanism against the light transmitting sheet held on the sheet holding mechanism, in which the thrusting mechanism progressively thrusts the disc substrate beginning from the center towards an outer periphery of the disc substrate. The thrusting member progressively pressures the disc substrate beginning from the center towards the outer periphery of the disc substrate to remove any air bubble incidentally trapped on the bonding surface.

In yet another aspect, the present invention provides a method for the preparation of an optical disc comprising a step of bonding a disc substrate carrying a signal recording surface on at least one surface thereof with an adhesive layer to a light transmitting sheet so that the light transmitting sheet faces the signal recording surface, in which the disc substrate being progressively thrust in the bonding step against the light transmitting sheet beginning from the center towards the outer periphery. This eliminates any air bubble incidentally trapped on the bonding surface.

With the optical disc according to the present invention, in which the light transmitting layer provided on the signal recording surface of the disc substrate has an outer diameter smaller than the outer diameter of the disc substrate and an inner diameter larger than the inner diameter of the disc substrate, a step difference is produced at each of the inner and outer rims of the disc, so that, when a user grips the disc by applying the finger end to the center opening and the outer rim of the disc substrate, it is possible to prevent the finger from being sticky due to the adhesive layer such as to improve the tractability.

Moreover, with the optical disc according to the present invention, in which the air bubble incidentally existing in the light transmitting layer is suppressed to a size of approximately 100 $\mu$m or less as measured along the track direction, it is possible to improve recording and/or reproducing characteristics.

In addition, with the method and apparatus for the preparation of the optical disc according to the present invention, in which the pressure is applied progressively from the center towards the outer periphery of the disc in bonding the light transmitting sheet to the disc substrate, it becomes possible to reduce the volume of the air bubble incidentally trapped in the light transmitting layer.

BRIEF DESCRIPTION OF THE DRAWINGS

Fig.1 is a cross-sectional view showing an optical disc embodying the present invention.
Fig.2 is a plan view of the optical disc.
Fig.3 illustrates error correction in case the sector size is 512 bytes.
Fig.4 illustrates error correction in case the sector is 64 kbytes.
Fig.5 is a perspective view for illustrating an apparatus for the preparation of the optical disc.
Fig.6 is a plan view showing a sheet holding mechanism adapted for holding the light transmitting sheet.
Fig.7 is a cross-sectional view showing a sheet holding mechanism and a disc holding mechanism for supplying a disc substrate to this sheet holding mechanism.
Fig.8 is a cross-sectional view showing a thrusting mechanism for thrusting a disc substrate supplied to the sheet holding mechanism to the light transmitting sheet.
Fig.9 is a cross-sectional view showing the state in which the thrusting mechanism thrusts the disc substrate to the light transmitting sheet.
Fig.10 illustrates a method for bonding the disc substrate to the light transmitting sheet after providing the light transmitting sheet with an adhesive layer.
Fig.11 is a perspective view showing an embodiment in which the light transmitting sheet is provided with a protective sheet.
Fig.12 illustrates a method of bonding a disc substrate on a light transmitting sheet after providing the light transmitting sheet with an adhesive layer.

DESCRIPTION OF THE PREFERRED EMBODIMENTS

Referring to the drawings, preferred embodiments of according to the present invention will be explained in detail.

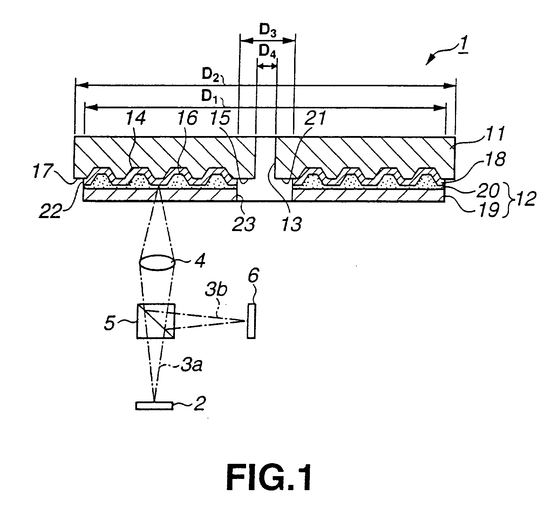

Referring to Fig.1, an optical disc 1 according to the present invention is a replay-only optical disc, and includes a disc substrate 11, on one surface of which is formed a signal recording surface, and a light transmitting layer 12 formed on this signal recording surface. A light beam is illuminated from the side light transmitting layer 12 to reproduce data from the signal recording surface 14. That is, light beam 3a, radiated from a light emitting section 2, comprised of a semiconductor laser, is converged on an objective lens 4 and thereby focussed on the signal recording surface 14, with a reflected return light beam 3b being reflected by approximately 90° by a beam splitter 5 and detected by a photodetector 6 to reproduce data. In the optical disc 1, a light beam with a wavelength of 405 nm is used, with the numerical aperture NA of the objective lens 4 being 0.85. By using this light beam 3 and the objective lens 4, the optical disc 1, 120 mm in diameter, has a recording capacity not less than 22 GB.

The above-described optical disc 1 has a disc substrate 11 not less than 0.3 mm in thickness, for example, 1.1 mm. The reason for the optical disc 1 to have this thickness is that, if the disc substrate 11 is of a thickness not larger than 0.3 mm, the stamper pattern cannot be transcribed precisely to the disc substrate 11. This disc substrate 11 is formed by injection molding a resin material, such as polycarbonate resin, and has a center opening 13 and a signal recording surface 14 on its one surface having transcribed thereon a pattern from the stamper corresponding to data signals for recording. This signal recording surface 14 has a radially inner non-recording area 15 around the center opening 13 and a signal recording area 16 on a radially outer side of the radially inner non-recording area 15. On the radially outer side of the signal recording area 16 is formed a radially outer non-recording area 17.

Since this disc substrate 11 does not operate as a light transmitting layer, in contradistinction from the conventional disc substrate, the disc substrate 11 need not be a light transmitting substrate. Moreover, the disc substrate 11 may be formed of a material other than a plastics material, such as glass, ceramics or metal.

On the signal recording surface 14 of the disc substrate 11 is formed a reflecting film 18 formed of metal, such as Al, operating as a reflecting film for the light beam 3a. In the case of a recordable optical disc, a signal recording layer comprised of a signal recording layer (s) comprised in turn of a magneto-optical recording layer, a phase-change recording layer, an organic dye layer, or combinations thereof is formed on the reflecting film 14. The recording layer is formed so as to exhibit light transmitting properties so as to reflect the light beam 3a by the reflecting film 18.

On this reflecting film 18 is formed the light transmitting layer 12 comprised of a light transmitting sheet 19 and an adhesive layer 20 for bonding the light transmitting sheet 19 to the reflecting film 18.

The light transmitting sheet 19 is formed as a polymer sheet exhibiting light transmitting properties with low birefringence, such as a thermoplastic sheet. The thermoplastic resins may be exemplified by, for example, polycarbonate, polyester and amorphous polyolefin. Specifically, a polycarbonate sheet (C1400 manufactured by TEIJIN KK) 70 $\mu$ m thick is used as this light transmitting sheet 19. For the adhesive layer 20, a pressure-sensitive adhesive (PSA) superior in light transmitting properties and in uniform thickness, such as, for example, DVD-8310 manufactured by NITTO DENKO KK, 40 $\mu$m in thickness, is used.

The light transmitting layer 12, made up of the light transmitting sheet 19 and the adhesive layer 20, is formed to have an overall thickness of 3 to 177$\mu$m. The reason for the light transmitting layer 12 to have this thickness is that, if the function of the light transmitting layer 12 is taken into consideration, a thinner thickness of the light transmitting layer 12 is desirable for high recording density because the objective lens 4 of a higher NA value can then be used, however, since thus light transmitting layer 12 also operates as a protective layer for the signal recording surface 14, a thinner thickness of the light transmitting layer 12 leads to a worsened protective function for the signal recording surface 14. For this reason, the lower limit value of the light transmitting layer 12 is set to 3 $\mu$m in consideration of the reliability of the optical disc 1 or the possible collision of the objective lens 4. On the other hand, the upper limit of the thickness of the light transmitting layer 12 is set to 177 $\mu$m in order to cope not only with the red laser but also with blue laser to take account of the tendency towards using a shorter wavelength of the light beam radiated from the light emitting section 2.

The light transmitting layer 12 comprised of the light transmitting sheet 19 and the adhesive layer 20 has a circular center opening 23 in register with the center opening 13 of the disc substrate 11. Moreover, the light transmitting sheet 19 is formed so that its outer diameter $D_1$ is smaller than the outer diameter $D_2$ of the disc substrate 11 and so that its inner diameter $D_3$ is larger than the inner diameter $D_4$ of the disc substrate 11. For example, when bonded to the disc substrate 11, 120 mm in diameter, the light transmitting sheet 19 and the adhesive layer 20 forming the light transmitting layer 12 are formed so as to have an outer diameter $D_1$ and an inner diameter $D_3$ equal to 119.1 mm and 22.8 mm, respectively. That is, the optical disc 1 is provided with a radially inner step 21 and a radially outer step 22 around the center opening 13 and on the radially outer side of the disc, respectively. By the light transmitting layer 12 being smaller than the disc substrate 11, no adhesive of the adhesive layer 20 can be exuded to the inner or outer rim of the optical disc 1, while the user's finger can be protected from wet feeling when holding the optical disc at the center opening 13 and the radially outer rim of the disc 1, such as to improve tractability and to prevent foreign matter such as dust and dirt from becoming affixed to the optical disc 1.

Meanwhile, the rim portion of the center opening 13 of the disc substrate 11 at the radially inner step 21 via which it is exposed to outside registers with the radially inner non-recording area 15, while the outer rim of the radially outer step 22 via which it is exposed to outside registers with the radially outer non-recording area 17. That is, the light transmitting sheet 19 is formed to a size at least capable of protecting the signal recording area 16. Therefore, the light transmitting layer 12 may be larger than the signal recording layer 16, within the range smaller than the outer diameter $D_2$ of the disc substrate 11 and larger than its inner diameter $D_4$, provided that the light transmitting layer 12 is sized to be large enough to protect at least the signal recording layer 16.

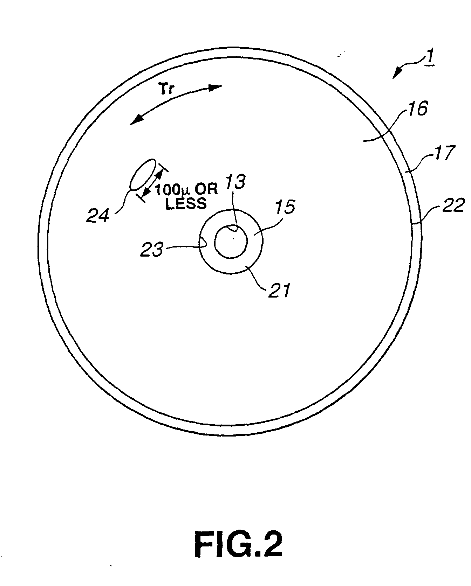

After the adhesive layer 20 is formed on the side light transmitting sheet 19 or on the side disc substrate 11, the light transmitting sheet 19 and the disc substrate 11 are bonded together in such a manner that the disc substrate 11 will be sequentially thrust from the center towards the outer rim side against the light transmitting sheet 19 placed on the sheet holding member on the optical disc manufacturing device. In this manner, no large-size air bubble can be formed in a bonding portion between the disc substrate 11 and the light transmitting sheet 19, such as an air bubble 2cm in size, extending along the recording track. Specifically, this bonding portion is formed so that the air bubble 24 will be not larger than 100 μm along the recording track, that is along the direction indicated by arrow Tr in Fig.2. Thus, in the optical disc 1, it is possible to use conventional error correction system employing the error correction code comprised of redundancy signals appended to data signals.

That is, in the present optical disc 1, the error correction and interleaving are used in conjunction so that data can be restored even if the data is interrupted due to e.g., air bubbles or crinkling. The error correction in case the air bubble 24 is suppressed to 100 μm or less in the track direction is now explained in comparison with the case in which an air bubble 2 cm is formed as conventionally along the recording track direction.

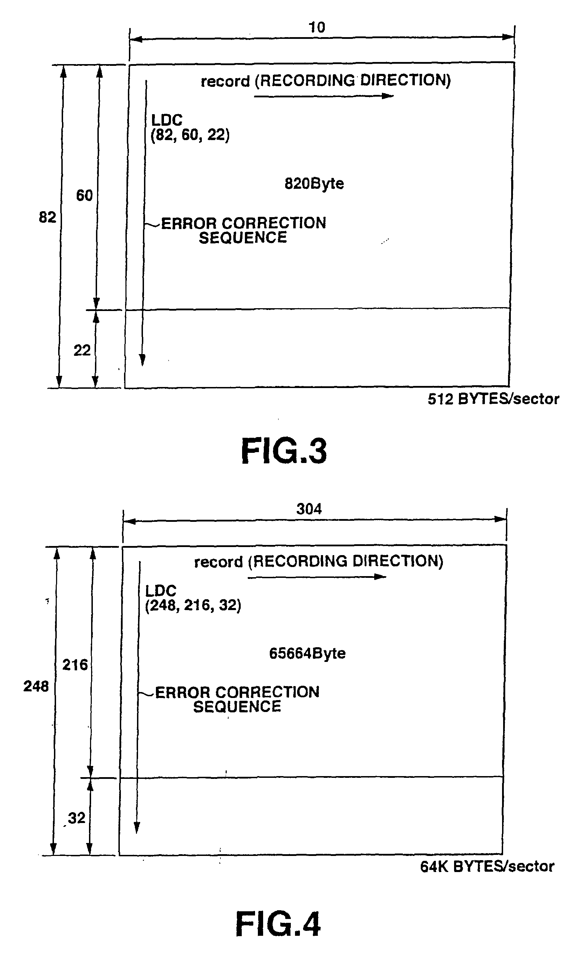

When the disc substrate 11 and the light transmitting sheet 19 are bonded together, the air bubble 24 is extended in the radial direction as well. It is noted that, since the length of one sector is smaller than the length of one track, and data recording and/or reproduction is on the sector basis, it is only sufficient to take the length of the air bubble along the track direction. Referring to Fig.3, the case of using an LDC (long distance code) used up to now with the track line density signals of 1.6 μm/byte, a sector size of 512 bytes and an interleaving length of 10 bytes, is hereinafter explained.

In the absence of error correction, the air bubble 24 of 100 μm contained in the light transmitting layer 12 generates a burst error 60 (= 100/1.6) bytes long, whereas an air bubble of 2cm produced in the conventional optical disc generates a burst error of 12500 (= 2000/1.6) bytes in the optical disc 1, in which the interleaving length is 10 bytes, a 6 (= 60/10) byte error is produced per each error correction sequence, such that redundancy signals usually equal to twice 6 bytes, that is 12 bytes, need to be appended in order to render the error correctable.

In the foregoing. only burst errors have been discussed. If the effect of random errors is to betaken into consideration, error correction is made in case the random errors have occurred in conjunction with the burst errors. The random errors usually occur at a rate of $1 \times 10^{-4}$, that is at a rate of one byte per 10000 bytes. If the random errors occurring at this probability is to be corrected by error correction, it is sufficient if the original signals can be restored at an error rate of the order of $1 \times 10^{-12}$. In making calculations taking the effect of the random error into account, in the case of 512 bytes, since a 12-byte error has already been produced per sequence due to the burst error, the remaining portion of the residual signals, that is 10 (= 22-12) bytes, may be used for correcting the random error. In this case, an error up to five bytes is correctable. The possibility of occurrence of uncorrectable errors is such that correction is possible even on occurrence of five errors in a sequence, but six or more errors per sequence are uncorrectable. The probability of occurrence of uncorrectable errors may be found by the following approximation:

(0.0001 (random error rate) $\times$ 82 (probability of error occurrence in a particular sequence))[6] so that it is equal to $0.3 \times 10$-12. It is noted that multiplication in the above approximation is used because the probability is the concurrent occurrence probability.

The number of bytes of the data of the error correction sequence is 60 bytes ((512 + α)/10), where α is a signal appended for various usages of the user and is herein set to 82 bytes. So, the number of bytes of a sequence is 82 bytes (60 bytes + 22 bytes), with the total number being 820 bytes (= 82 bytes$\times$10). In this case, the redundancy (redundant bytes/total bytes) is approximately 27% (220/820).

This redundancy is usually suppressed to within 30%, in consideration that, if the volume of the redundant signals becomes excessive, the volume of the inherent data signals is correspondingly decreased to lower the recording efficiency. Should the size of the air bubble 24 be suppressed to 100 μm or less along the track direction, the redundancy is 27%. Therefore, the error code or interleaving used up to now may be used in consideration of the proportion of redundancy and the probability of occurrence of uncorrectable errors. On the other hand, should there be an air bubble 2 cm in length, the interleaving length is 10 bytes, so that, if LDC is used, 1250 (= 12500/10) byte errors are produced per each error correction sequence. Thus, in order for the errors to be correctable, it is necessary to append redundancy signals equal to double that volume, that is 2500 bytes. Since the number of bytes of the data of the error correction sequence is 60( (512 + α)/10) bytes, where α is appended bytes, the number of bytes in a sequence is *2560* (= 60 + 2500) bytes, so that the total number of bytes is 25600 (2560 bytes$\times$10) bytes. In such case, error correction cannot be made properly unless redundant bytes of 25000 bytes are appended to 512 bytes of data bytes (in actuality, the effective number of bytes is 600 bytes since the 82 supplementary bytes are appended to the data bytes). Thus, the redundancy (redundant bytes/ total bytes) is approximately 98 (=25000/25600)%. That is, should the air bubble exceed 2cm, the redundancy as set in ordinary designing, that is 30%, is exceeded, so that the error correction code or interleaving as the system, used up to now, can no longer be used.

As another case, a case of using the LDC with the track line density signal of 1.6 μm/byte, a sector size of 64 K (64$\times$1024 = 65536 bytes) and with an interleaving length of 304 bytes, is hereinafter by referring to Fig. 4.

As mentioned above, in the absence of the error correction, the air bubble 24 contained in the light transmitting layer 12 produces a burst error 60 (100/1.6) bytes long, whilst an air bubble 2cm produced in the conventional optical disc produces a burst error 12500 (=2000/1.6) bytes long.

The interleaving length is 304 bytes long, so that, should the LDC be used, only an error not larger than 1 byte (60/304 byte) is produced for one error correction sequence, even in the presence of an air bubble, thus testifying to the meritorious effect of the interleaving. Since the number of bytes of the error correction sequence is 216 bytes ((65536+$\alpha$)/304 bytes), where $\alpha$ is a supplementary byte and is herein equal to 128 bytes, the number of bytes per sequence on addition of 32 bytes from the error correction is 248 bytes (216 + 32 bytes), with the total number of bytes being 65664 (248 bytes $\times$ 304). The redundancy (redundant bytes/ total bytes) is approximately 15% ((32x304)/(216x304)). In this case, the random error correctability is represented by the following equation:

$$(0.0001 \times 248)^{16} = 0.2 \times 10^{-25}.$$

Since the redundancy can be suppressed to 30% or less, the error correction code or the interleaving, used up to now, may be used.

On the other hand, in the presence of air bubble of 2 cm, since the interleaving length is 304 bytes, approximately 42 (= 12500/304) error bytes are produced for one error correction sequence. For enhancing the error correction capability further, 82 redundant bytes are required. Since these 82 redundant bytes are used exclusively for burst error correction, further redundant signals for coping with random errors are required. The maximum possible redundancy for maintaining the redundancy not higher than 30% is 10 bytes. If more redundancy is added, the redundancy exceeds 30%. That is, if redundant bytes for 10 error bytes are further appended, the overall redundant bytes are 92 bytes, with the redundancy at this time being approximately 30% (92/310 bytes). The correction capability for random errors at this time is $0.88 \times 10^{-9} = ((0.0001 \times 310) \times 10^6)$, such that the error rate of approximately $1 \times 10^{-12}$ mentioned above cannot be achieved and hence the system reliability cannot be improved.

By the air bubble 24 contained in the light transmitting layer 12 being 100 $\mu$m or less along the track direction, as described above, the error correction and interleaving used up to now can be used. Since the sector size routinely used is 512 to 64 Kbytes, the above-described embodiment is not to be construed in a limitative sense. Moreover, the error correction system may also be a PC (product code). If the data is to be of higher density, a still smaller air bubble size, such as a size not larger than 50 $\mu$m, is desirable. If the sector size is 1024 bytes, the redundancy can be suppressed to 30% or less even if the air size along the track direction is 200 $\mu$ m.

Although the above-described embodiment provides a signal recording surface 14 on one surface of the disc substrate 11, the optical disc embodying the present invention may also be provided with a signal recording surface comprised of a crest-and-groove pattern on the light transmitting sheet 19 facing the disc substrate 11 to provide two signal recording layers. The optical disc embodying the present invention may also be a double side optical disc provided with signal recording surfaces on both surfaces of the disc substrate 11 and light transmitting sheets deposited on both of the signal recording surfaces.

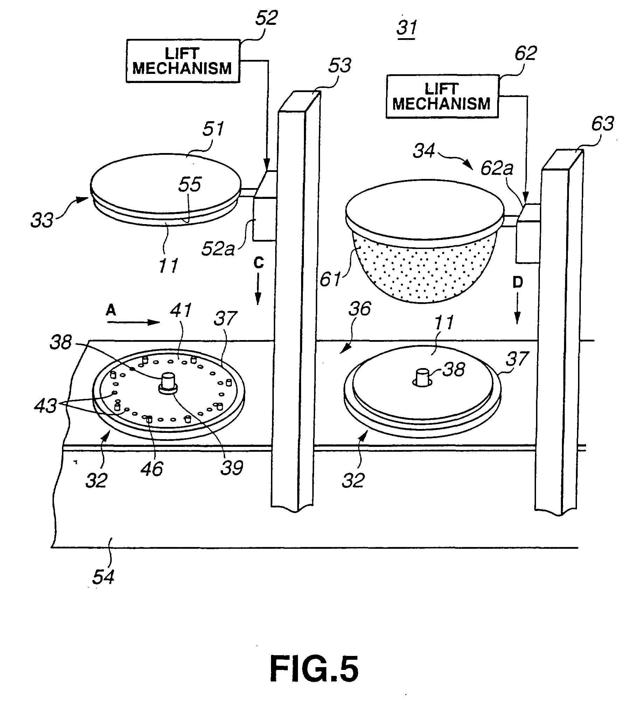

Referring to Fig.5, a device 31 for the preparation of the optical disc 1 includes a sheet holding mechanism 32 for holding the light transmitting sheet 19, a disc holding mechanism 33 for holding the disc substrate 11 bonded to the light transmitting sheet 19, and a thrusting mechanism 34 for thrusting the disc substrate 11 held by the disc holding mechanism 33 against the light transmitting layer 19 held on the sheet holding mechanism 32. In this device 31, the light transmitting sheet 19 held by the sheet holding mechanism 32 is arranged on the lower side and the disc substrate 11 is bonded to the light transmitting sheet 19 to prevent a thrusting mark occasionally produced on thrusting by the thrusting mechanism from being left on the light transmitting sheet 19.

The sheet holding mechanism 32, adapted for holding the light transmitting sheet 19, is provided on a transporting mechanism 36, such as a conveyor, as shown in Fig.5. This transporting mechanism 36 causes the sheet holding mechanism 32 to be moved in the direction indicated by arrow A in Fig.5 to transport the sheet holding mechanism 32 from a furnishing position of supplying the disc substrate 11 by the disc holding mechanism 33 to a thrusting position of thrusting the disc substrate 11 furnished to the sheet holding mechanism 32 onto the light transmitting sheet 19.

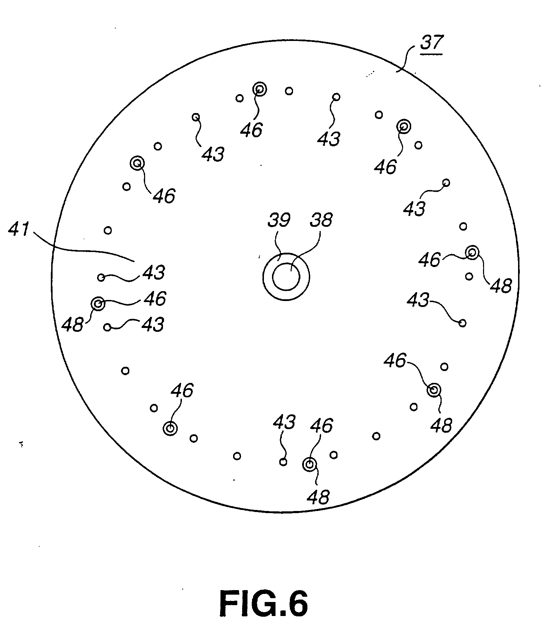

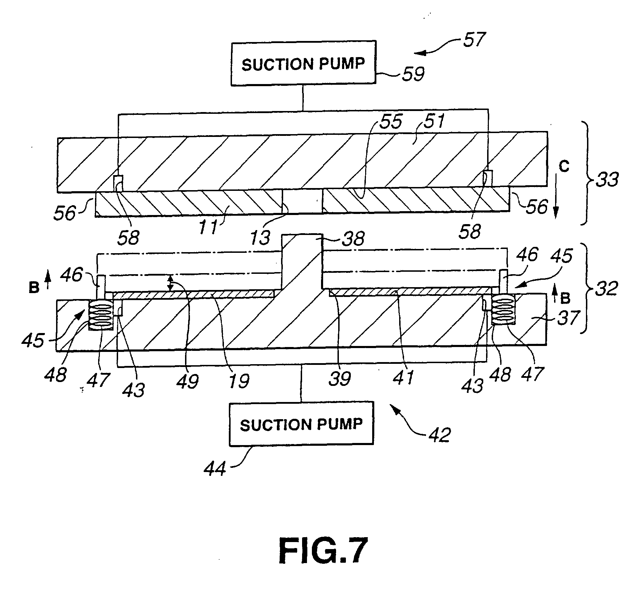

The sheet holding mechanism 32, provided in the transporting mechanism 36, includes a substantially circular sheet holding member 37 larger in diameter than the optical disc 1, as shown in Figs.6 and 7. This sheet holding member 37 has a center shaft 38 introduced into the center opening 13 of the disc substrate 11 to provide for the positioning of the disc substrate 1 supplied onto the sheet holding member 37. The proximal end of the center shaft 38 is provided with a positioning portion 39 which provides for the positioning of the light transmitting sheet 19. This positioning portion 39 has a diameter substantially equal to the diameter of a center opening 23 of the light transmitting sheet 19 making up the light transmitting layer 12 and is formed so as to be slightly higher than a setting portion 41 on which to put the light transmitting sheet 19. This positioning portion 39 is contacted by the radially inner non-recording area 15 on the disc substrate 11 when the disc substrate 11 thrusts the light transmitting sheet 19.

If the adhesive layer 20 is already provided on the signal recording surface 14 of the disc substrate 11, only the light transmitting sheet 19 is placed on this setting portion 41, whereas, if the adhesive layer 20 is not provided on the disc substrate 11, the light transmitting sheet 19, provided with the adhesive layer 20, is placed on the setting portion 41.

The setting portion 41 of the sheet holding member 37, on which is placed the light transmitting sheet 19, is formed to have a centerline mean roughness Ra smaller than 0.02 μm so as not to damage the surface of the light transmitting sheet 19 when bonding the disc substrate 11 to the light transmitting sheet 19. Of course, there is no necessity for forming the setting portion 41 so as to have a centerline mean roughness Ra smaller than 0.02 μm when setting the light transmitting sheet 19 on the setting portion 41 with a protective sheet in-between.

On this setting portion 41, there is provided a suction mechanism 42 for sucking the light transmitting sheet 19, as shown in Figs.6 and 7. This suction mechanism 42 includes plural suction holes 43 formed on the outer rim of the setting portion 41, and a suction pump 44 connected through a connection piping to these suction holes 43. The suction holes 43 are provided substantially annularly on the outer rim in the setting portion 41, formed to substantially the same size as the light transmitting sheet 19, such as to attract the outer rim of the light transmitting sheet 19 placed on the setting portion 41. The suction mechanism 42 sucks and holds the light transmitting sheet 19 by the suction pump 44 being activated only on detection by the detection unit of the supply of the light transmitting sheet 19 to the setting portion 41.

On the outer rim side of the sheet holding member 37, there is provided a supporting mechanism 45 on the outer rim of the sheet holding member 37 for holding the disc substrate 11 supplied form the disc holding mechanism 33. Referring to Figs.6 and 7, the supporting mechanism 45 is provided on the outer rim side of the setting portion 41, on which to set the light transmitting sheet 19, that is at a position facing the radially outer non-recording area 17 of the disc substrate 11 when the disc substrate 11 is supplied thereon. This supporting mechanism 45 includes a supporting pin 46 for supporting the disc substrate 11 supplied from the disc holding mechanism 33 on the light transmitting sheet 19 resting on the setting portion 41, and a biasing member 47, such as a torsion coil spring, for biasing the supporting pin 46 in a direction of hoisting the supporting pin 46.

A plurality of the supporting pin 46, as supporting means for the disc substrate 11, are provided outwardly of the setting portion 41. These supporting pins 46 are mounted on the sheet holding member 37 are mounted for movement in a direction of supporting the disc substrate 11 supplied from the disc holding mechanism 33 in a hoisted state, that is in a direction indicated by arrow B, or in the opposite direction to the arrow B direction, as shown in Fig.7. The supporting pin 46 is guided by a mounting hole 48 and moved between a hoisting position of uplifting the disc substrate 11 so that a clearance 49 will be produced between the light transmitting sheet 19 as set on the setting portion 41 and the disc substrate 11, and a receded position in which the setting portion 41 is substantially flush with the distal end, for contacting the disc substrate 11 with the light transmitting sheet 19. The supporting pin 46 is biassed by the biasing member 47 in the direction indicated by arrow B in Fig.7 corresponding to the direction of uplifting the disc substrate 1.When in the uplifting position, the supporting pin 46 contacts the outer rim of the light transmitting sheet 19 resting on the setting portion 41 to operate as a positioning member for the light transmitting sheet 19.

Meanwhile, the following coil spring, for example, is used as the biasing member 47:

> outer diameter: 2.00 mm;
> line diameter: 0.20 mm
> free height: 6.00 mm
> total number of turns: 9.5
> height with the turns contacting one another: 2.10 mm
> spring constant: 0.314 N/mm (0.032 kgf/mm)
> initial flexure: free height - mounting initial length = 1.0 mm
> initial spring force: initial flexure $\times$ spring constant = 0.314 N
> maximum flexure = initial flexure + stroke = 2.5 mm
> maximum spring force = maximum flexure $\times$ spring constant = 0.785 N

When the light transmitting sheet 19 is supplied to the setting portion 41, the supporting mechanism 45 is at the hoisting position of uplifting the disc substrate 11, protruded from the sheet holding member 37 under the bias force of the biasing member 47. Thus, the supporting pin 46 operates as a guide when the supplying mechanism furnishes the light transmitting sheet 19 to the setting portion 41, while operating as a positioning member, along with the center shaft 38, when the light transmitting sheet 19 is supplied to the setting portion 41. When the disc substrate 11 is furnished to the sheet holding mechanism 32 by the disc holding mechanism 33, the disc substrate 11 is supported by the supporting pin 46 in the uplifting position. That is, the disc substrate 11 is supported by the supporting pin 46 so that clearance 49 is provided between it and the light transmitting sheet 19. When the disc substrate, supported by the supporting pins 46, is bonded to the light transmitting sheet 19 resting on the setting portion 41, the disc substrate 11, supported by the supporting pins 46 on the light transmitting sheet 19 resting on the setting portion 41, is thrust by the thrusting mechanism 34. The disc substrate 11, supported by the supporting pins 46, is thrust in the direction opposite to that indicated by arrow B in Fig.7, that is in a direction of being pulled into the inside of the sheet holding member 37 against the bias of the biasing member 47, so that the disc substrate 11 is bonded to the light transmitting sheet 19 of the setting portion 41.

For supporting the disc substrate 11 having a diameter of, for example, 120 mm, the supporting pins 46 are provided at the positions corresponding to the diameters of 119.0 mm, 119.2 mm, 119.4 mm, 119.6 mm or 119.8 mm, depending on the outer diameter $D_1$ of the light transmitting sheet 19. The supporting pins 46are provided so as to have a stroke of, for example, 1 mm.

The sheet holding mechanism 32 is provided in the transporting mechanism 36, as described above. First, the light transmitting sheet 19 is sent to the setting portion 41. Then, if the sheet holding mechanism 32 is at the position of supplying the disc substrate 11, the disc substrate 11 is furnished onto the supporting pins 46 of the supporting mechanism 45. The sheet holding mechanism 32 is moved by the transporting mechanism 36 in the direction indicated by arrow A in Fig.5 so as to be transported from the position of supplying the disc substrate 11 to the disc substrate thrusting position downstream of the disc substrate supply position. In this thrusting position, the disc substrate, supported by the supporting pins 46, is thrust by the thrusting mechanism 34 so as to be thereby bonded to the light transmitting sheet 19 placed on the setting portion 41.

Meanwhile, the positioning of the light transmitting sheet 19 with respect to the setting portion 41 may be by image recognition of the center opening 23 or by measurement of the fluctuations in the transmittance, in place of by the positioning portion 39 or by supporting pins 46.

Meanwhile, as described below in detail, the sheet holding mechanism 32 holds a sheet member 70, provided with a pressure-sensitive adhesive 83, operating as the adhesive layer 20, if the manufacturing method is used which consists in providing the adhesive layer 20 in the signal recording surface 14 of the disc substrate 11 and subsequently bonding the disc substrate 11 to the light transmitting sheet 19.

The disc holding mechanism 33 for holding the disc substrate 11 is hereinafter explained. Referring to Fig.5, the disc holding mechanism 33 is arranged at the position of supplying the disc substrate 11 upstream of the transporting mechanism 36. Referring to Figs.5 and 7, the disc holding mechanism 33 includes a disc holding member 51 for holding the disc substrate 11 to be bonded to the light transmitting sheet 19, and a lift mechanism 52, comprised of e..g., a cylinder unit, for causing movement of the disc holding member 51 in the direction indicated by arrow C and in the direction opposite to that indicated by arrow C in Figs.5 and 7, that is in a direction towards and away from the sheet holding mechanism 32. The disc holding member 51 is mounted on a mounting member 52a in turn mounted for movement on a guide shaft 53 mounted on a main body portion 54, and is moved by the lift mechanism 52 in the direction indicated by arrow C and in the direction opposite to that indicated by arrow C in Figs.5 and 7, that is in a direction along the guide shaft 53.

The disc holding member 51 has a holder *55* for holding the disc substrate 11, as shown in Fig.7. Around the holder *55* are cyclically arranged positioning portions 56 for setting the holding position for the disc substrate 11. This holder 55 is formed to a circular shape of substantially the same size as the disc substrate 11. This holder 55 is provided with a suction mechanism 57 for holding under suction the disc substrate 11 supplied from a supplying mechanism. This suction mechanism 57 includes plural suction holes 58 provided on an outer rim side of the holder *55* and a suction pump 59 connected to these suction holes 58 through a connection pump. The suction holes 58 are provided subsequently annularly on the outer rim of the holder 55, formed to substantially the same size as the disc substrate 11, in such a manner as to attract the disc substrate 11 supplied to the holder 55 from the supplying mechanism. The suction mechanism 57 sucks the disc substrate 11 by the suction holes 58 by the suction pump 59 being turned on as from the holding of the disc substrate 11 until supply of the disc substrate 11 of the sheet holding mechanism 32.

The disc holding mechanism 33 when holding the disc substrate 11 is at an uplifted position to which the disc holding member 51 has been moved in the direction opposite to that indicated by arrow C under guidance by the guide shaft 53. When the disc substrate 11 is held by the holder 55, the suction pump 59 is actuated so that the disc substrate 11 is sucked by the suction holes 58 so as to be held by the holder 55. The disc holding member 51 is moved in the direction indicated by arrow C in Fig.5. When the disc holding member 51 is moved to its lower limit position, the suction pump 59 is de-energized to supply the disc substrate 11 to the supporting pins 46 of the sheet holding mechanism 32. Subsequently the disc holding member 51 is moved in the direction opposite to that indicated by arrow C in Fig. 5 for holding the next disc substrate 11.

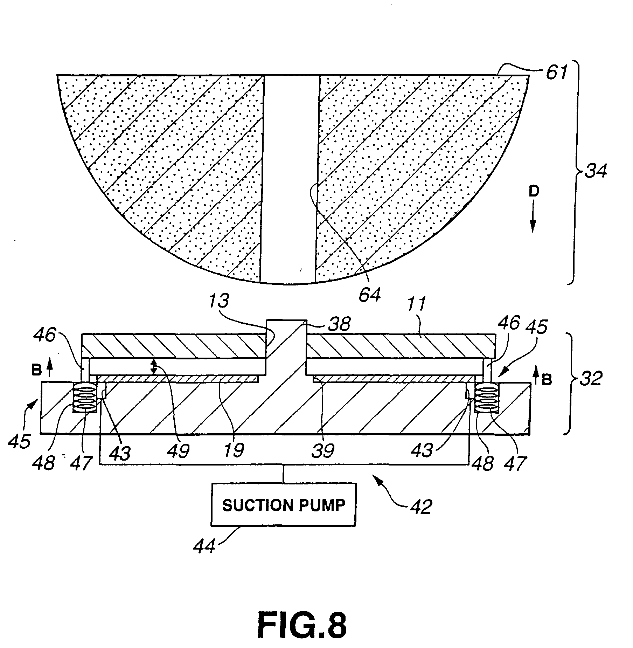

The thrusting mechanism 34 for thrusting the disc substrate 11 held by the disc holding mechanism 33 onto the light transmitting sheet 19 held by the sheet holding mechanism 32 is hereinafter explained. This thrusting mechanism 34 is arranged at a thrusting position downstream of the transporting mechanism 36, as shown in Fig.5. The thrusting mechanism 34 includes a thrusting member 61 for bonding the disc substrate 11 supported by the supporting pins 46 to the disc substrate 11 carried by the supporting pins 46, and a lift mechanism 62, comprised of e.g., a cylinder mechanism, for causing movement of the thrusting member 61 in a direction towards and away from the sheet holding mechanism 32, that is in the direction indicated by arrow D and in the direction opposite to that indicated by arrow C in Figs.5 and 8. The thrusting member 61 is mounted on a mounting member 62a movably mounted on the guide shaft 63 provided on the main body portion 54.

The thrusting member 61 is mounted on a mounting member 62a, movably mounted on the guide shaft 63 provided on the main body portion 54, so as to be moved by the lift mechanism 62 along the guide shaft 63 in the direction indicated by arrow D and in the direction opposite to that indicated by arrow in Figs.5 and 8.

The thrusting member 61, adapted for thrusting the disc substrate 11, carried by the supporting pins 46, is comprised of a resilient member of, for example, silicon rubber, to a substantially hemi-spherical shape, and is mounted on the mounting member 62a so that the spherically-shaped side thereof sill face downwards, that is towards the disc substrate 11, to thrust the disc substrate 11 sequentially beginning from the center towards the outer rim of the disc substrate 11. The thrusting member 61 is formed with an engagement opening 64 engaged by the center shaft 38 provided on the sheet holding member 37 of the sheet holding mechanism 32 for positioning the thrusting member 61 with respect to the disc substrate 11 when the thrusting member 61 acts on the disc substrate 11 carried by the supporting pins 46.

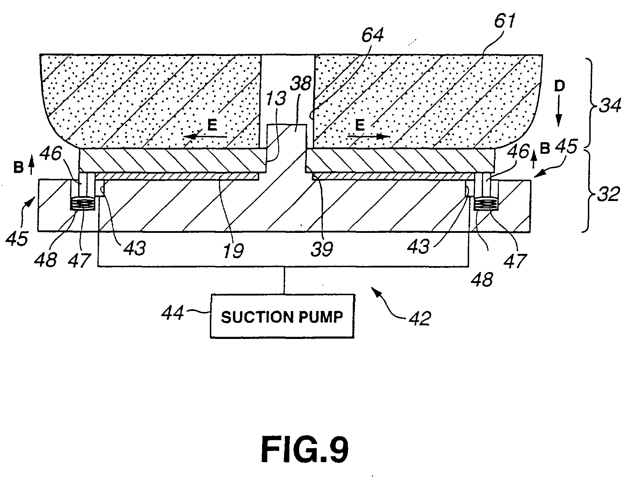

With the above-described thrusting mechanism 34, when the sheet holding mechanism 32 carrying the disc substrate 11 by the supporting pins 46 is transported by the transporting mechanism 36 from the disc substrate supply position to the disc substrate thrusting position, the thrusting member 61 is hoisted by the lift mechanism 62 in the direction opposite to that indicated by arrow D in Fig.5 to set the thrusting member 61 at an uplifted position. When the sheet holding mechanism 32 is transferred to the thrusting position, the thrusting member 61 is moved by the lift mechanism 62 to its lower position in the direction indicated by arrow D in Fig.5 to its lower position, whereby the thrusting member 61 thrusts the disc substrate 11 carried by the supporting pins 46, as shown in Fig.9.

At this time, the thrusting member 61 thrusts the disc substrate 11 in position with respect to the disc substrate 11 by the center shaft 38 engaging in the engagement opening 64. The disc substrate 11 then is moved in the direction indicated by arrow D in Fig.9 against the force of the biasing member 47 biasing the supporting pins 46 in the disc substrate uplifting direction. This causes the disc substrate 11 to be sequentially elastically deformed to collapse the thrusting member 61 to apply a force progressively from the center to the outer rim of the disc substrate 11, that is in the direction indicated by arrow E in Fig. 9, so that the disc substrate 11 is bonded to the setting portion 41 provided on the sheet holding member 37.

Specifically, the thrusting member 61 thrusts the disc substrate 11 against the light transmitting sheet 19 at 5 to 10 kgf/cm$^2$ for one to 30 seconds. Thus, if injection molded as usual, the disc substrate 11 is formed so that the center side will be thinner than the rim side, due to the difference in the cooling conditions between the center and outer rim side, with the disc substrate being warped in its entirety. Since the disc substrate 11 is thrust by the thrusting member 61 from the center side towards the outer rim side, it is possible to extrude air present in the bonding surface of the disc substrate 11 and the disc substrate 11 towards the outer rim side, so that the size of the air bubble 24 can be approximately 100 μm or less. The thrusting member 61 then is moved in the direction opposite to that indicated by arrow 24. The thrusting member 61 then is moved away from the sheet holding mechanism 32, that is in the direction opposite to that indicated by arrow D in Fig. 5, so that it is moved away from the disc substrate 11.

The thrusting mechanism 34, which will be explained subsequently, thrusts the disc substrate 11 against the sheet material 70 held by the sheet holding mechanism 32 in case a manufacturing method consisting in providing an adhesive layer 20 on the signal recording surface 14 of the disc substrate 11 and subsequently bonding the disc substrate 11 to the light transmitting sheet 19 is used.

The overall operation of the apparatus 31 for producing the optical disc 1 as described above is now explained. First, referring to Figs.5 and 7, the setting portion 41 of the sheet holding member 37 of the sheet holding mechanism 32 is fed with a light transmitting sheet 19. At this time, the light transmitting sheet 19 is put on the setting portion 41, as the light transmitting sheet 19 is attracted by the suction mechanism 42 with the suction holes 43, with the inner rim of the light transmitting sheet 19 being positioned by the positioning portion 39, and with the outer rim of the. light transmitting sheet 19 being positioned on the setting portion 41 by the supporting pins 46 biassed the biasing member 47 in the direction indicated by arrow B in Fig.7. The sheet holding mechanism 32, the light transmitting sheet 19 of which is held on the setting portion 41, is transported by the transporting mechanism 36 in the direction indicated by arrow A in Fig.5 so that the sheet holding mechanism 32 is transported to the disc substrate supplying position.

At this transporting position, the sheet holding mechanism 32, carrying the light transmitting sheet 19, is fed with the disc substrate 11 by the disc holding mechanism 33 so that the signal recording surface 14 of the disc substrate 11 will face the sheet holding mechanism 32, as shown in Fig.7. Specifically, the disc holding member 51 in its uplifted position sucks and holds the disc substrate 11 by the suction mechanism 57, with the signal recording surface 14 thereof facing downwards, that is towards the sheet holding mechanism 32 by means of the holder 55 having the suction holes 58. When the sheet holding mechanism 32 has been moved to the supply position, the disc holding member 51 descends in the direction indicated by arrow C in Fig.5 as far as the lower position. The suction pump 59 is de-energized at this time so that the disc holding member 51 furnishes the disc substrate 11 to the supporting pins 46 of the sheet holding mechanism 32.

The sheet holding mechanism 32, fed with the disc substrate 11, is further moved in the direction indicated by arrow A in Fig.5, by the transporting mechanism 36, to transfer the disc substrate 11, carried by the supporting pins 46, to a thrusting position of thrusting the light transmitting sheet 19 placed on the setting portion 41. In this thrusting position, the thrusting member 61 is moved by the lift mechanism 62 in the direction indicated by arrow D in Fig.5 to its lower position. The thrusting member 61 thrusts the disc substrate 11 as the thrusting member 61 is positioned with respect to the disc substrate 11 with the center shaft 38 engaging in the engagement opening 64. The disc substrate 11 then is moved in the direction indicated by arrow D in Fig.9 against the bias of the biasing member 47 biasing the supporting pins 46 in the disc substrate uplifting position. This resiliently deforms the thrusting member 61 as if it is progressively collapsed from the inner rim side towards the outer rim side of the disc substrate 11. Thus, the thrusting force is applied from the center towards the outer rim of the disc substrate 11, that is in the direction indicated by arrow E in Fig.9, such that the disc substrate 11 is bonded to the light transmitting sheet 19 placed on the setting portion 41 provided on the sheet holding member 37 of the sheet holding mechanism 32. The manufacturing device 31 thus unifies the disc substrate 11 to the light transmitting sheet 19 to complete the optical disc 1.

In the above-described optical disc manufacturing device 31, the disc substrate 11 is bonded to the light transmitting sheet 19, with the highly tough disc substrate 11 lying on the upper side and with the light transmitting sheet 19 thinner in thickness and lower in toughness than the disc substrate 11 lying on the lower side, to prevent minute crests and recesses from being transcribed from the thrusting surface. In bonding the disc substrate 11 to the light transmitting sheet 19, the thrusting member 61 thrusts the disc substrate 11 by a spherically-shaped side of a hemispherically-shaped elastic main body portion to extrude air present on the bonding surface between the light transmitting sheet 19 and the disc substrate 11 towards the outer rim side. Thus, in the optical disc manufacturing device 31, the air bubble 24 formed on the bonding surface of the disc substrate 11 an the light transmitting sheet 19 to approximately 100 μm or less to provide the optical disc 1 capable of recording data to high recording density with reduced redundancy.

Referring to the drawings, the method for the preparation of the optical disc 1 employing the above-described manufacturing device 31 is explained in detail. For producing the optical disc, there are two methods, that is a method in which the adhesive layer 20 is first provided on the signal recording surface 14 of the disc substrate 11, and subsequently the disc substrate 11 is bonded to the light transmitting sheet 19, and a method in which the adhesive layer 20 is provided on the light transmitting sheet 19, and subsequently the disc substrate 11 is bonded to the light transmitting sheet 19.

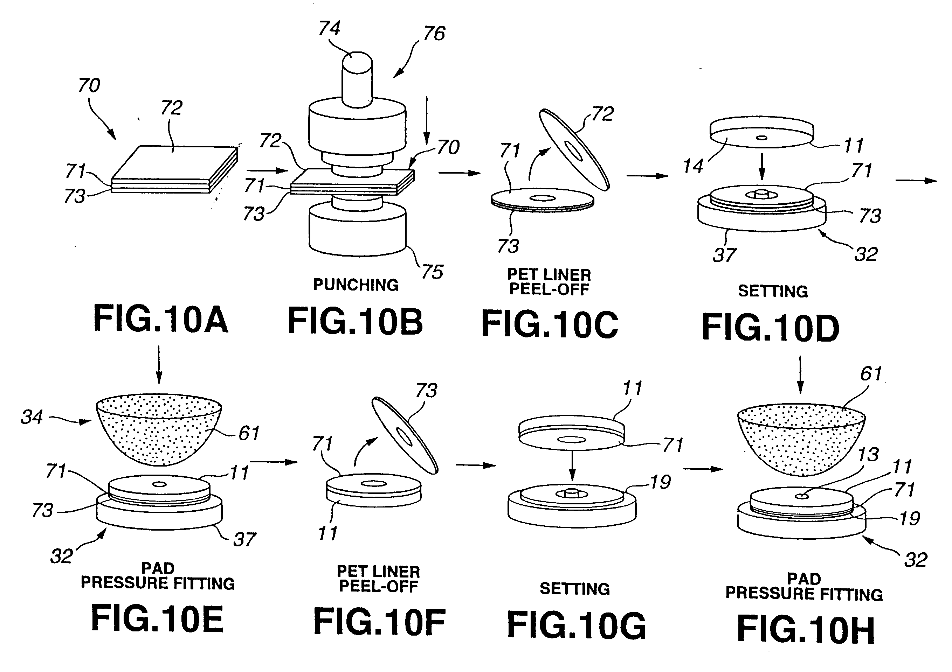

First, the method in which the adhesive layer 20 is first provided on the signal recording surface 14 of the disc substrate 11, after which the disc substrate 11 is bonded to the light transmitting sheet 19, is explained with reference to Fig.10. First, the disc substrate 11, and a sheet material 70, which is comprised of first and second release sheets 72, 73, formed of polyethylene terephthalate, formed on both sides of a pressure-sensitive adhesive 71, as the adhesive layer 20 for the light transmitting sheet 19, are prepared. The disc substrate 11 and the sheet material 70 are punched to substantially the ring shape by a press unit 76 comprised of an upper die 74 and a lower die 75. It is noted that the sheet material 70 is punched so that its outer diameter is smaller than the outer diameter of the disc substrate 11 and so that its inner diameter is larger than the inner diameter of the disc substrate 11.

Then, as shown in Fig.10C, the first release sheet 72, provided on one surface of the pressure-sensitive adhesive 71, is peeled off from the sheet material 70, punched substantially to a ring shape. This substantially ring-shaped sheet material 70, from which the first release sheet 72 has been peeled off, is bonded to the signal recording surface 14 of the disc substrate 11 with one surface of the pressure-sensitive adhesive 71 from which the first release sheet 72 has been peeled off.

Specifically, the substantially ring-shaped sheet material 70, from which the first release sheet 72 has been peeled off, is bonded to the disc substrate 11 by a device having a mechanism comparable to the sheet holding mechanism 32 and the thrusting mechanism 34 of the above-described manufacturing device 31. Referring to Figs.8, 9 and 10D, the substantially ring-shaped sheet material 70, from which the first release sheet 72 has been released, is placed on the setting portion 41 of the sheet holding mechanism 32 with the one surface of the pressure-sensitive adhesive 71 exposed to outside lying upwards. On the other hand, the disc substrate 11 is supported by the supporting pins 46 of the supporting mechanism 45 provided on the sheet holding member 37 so that the signal recording surface 14 thereof faces the pressure-sensitive adhesive 71. By the thrusting member 61 of the thrusting mechanism 34, the disc substrate 11 is thrust against the sheet material 70, as indicated in Figs.9 and 10E. So, the signal recording surface 14 of the disc substrate 11 is bonded to one surface of the pressure-sensitive adhesive 71 of the substantially ring-shaped sheet material 70, from which the first release sheet 72 has been peeled off.

Meanwhile, if the size of the air bubble contained in the bonding surface between the disc substrate 11 and the sheet material 70 is to be reduced further, it is sufficient if the disc substrate 11 and the sheet material 70 are bonded together in vacuum with 1/10 atm or less. Alternatively, defoaming under a pressure of not less than 3 atm may be used. For defoaming under pressure, more effective defoaming may be achieved by heating in a temperature range from ambient temperature to 100°C.

From the sheet material 70, bonded to the disc substrate 11, the second release sheet 73 is peeled off, as indicated in Fig.10F. This affords the pressure-sensitive adhesive 71, forming the adhesive layer 20, to the disc substrate 11. The disc substrate 11, provided with the pressure-sensitive adhesive 71, is held by the disc holding mechanism 33, with the pressure-sensitive adhesive 71 downwards, as shown in Figs.7 and 10G. On the other hand, the light transmitting sheet 19 is held by the holder 41 of the sheet holding mechanism 32 such as to face the signal recording surface 14 of the disc substrate 11 held by the disc holding mechanism 33. This light transmitting sheet 19 is formed by punching an elongated light transmitting sheet by a press device. The light transmitting sheet 19, thus prepared on punching, is formed so that its outer diameter D1 is smaller than the outer diameter D2 of the disc substrate 11 and so that its inner diameter D3 is larger than the inner diameter D4 of the disc substrate 11. Preferably, the light transmitting sheet 19 is punched so that it is coextensive with the aforementioned pressure-sensitive adhesive 71. The disc substrate 11, now carrying the pressure-sensitive adhesive 71, is supported by the supporting pins 46 of the supporting mechanism 45 of the sheet holding mechanism 32 by the disc holding mechanism 33 being moved in the direction indicated by arrow C in Fig.7. Referring to Figs. 8, 9 and 10H, the disc substrate 11 is pressed against and fitted to the light transmitting sheet 19, by the thrusting member 61 of the thrusting mechanism 34 being moved in the direction indicated by arrow D in Fig.8. That is, a thrusting force is applied to the disc substrate 11 progressively beginning from the center side towards the outer rim side. This unifies the disc substrate 11 and the light transmitting sheet 19 together to complete the optical disc 1.

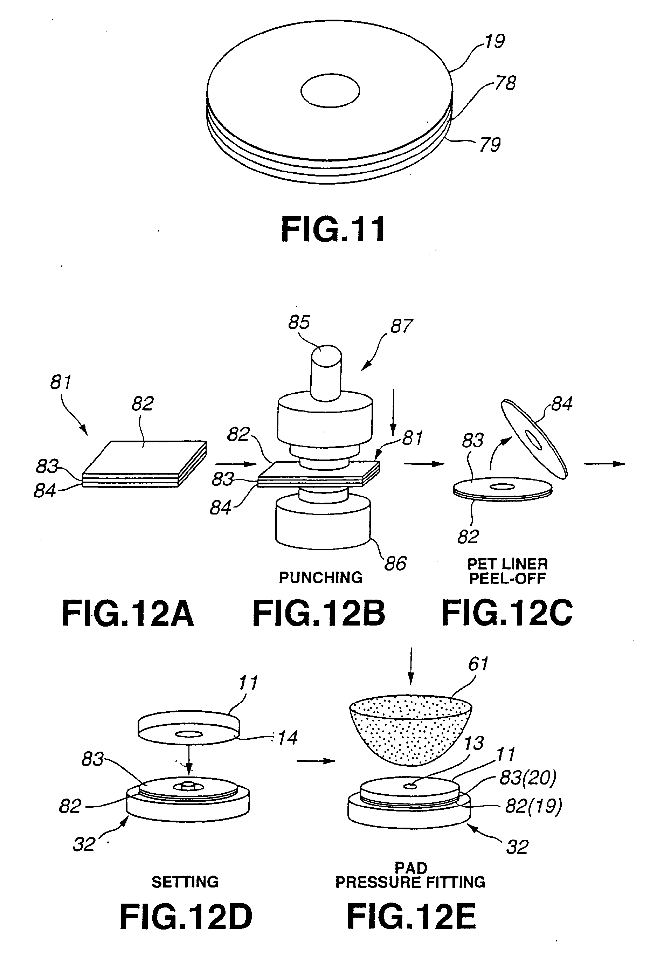

The surface of the light transmitting sheet 19 contacting the setting portion 41 of the sheet holding mechanism 32 may also be provided with a protective sheet 79 with the interposition of am adhesive layer 78, as shown in Fig.11. Since the surface of the light transmitting sheet 19 illuminated by the light beam 3a is protected by the sheet 79, there is no necessity for machining the setting portion 41 to a mirror finish.

In the above-described manufacturing method for the optical disc 71, the elongated sheet material 70 and the elongated light transmitting sheet are punched to substantially a ring shape, the ring-shaped sheet material 70 is bonded to the disc substrate 11 and the light transmitting sheet then is bonded, so that the optical disc 1 can be produced speedily continuously. In bonding the sheet material 70 to the disc substrate 11 and bonding the light transmitting sheet 19 to the disc substrate 11, since the thrusting member 61 formed of an elastic material is used and a pressure is applied progressively from the center towards the outer rim side, it is possible to push the air bubble generated on the bonding surface towards the outer rim side. So, the air bubble size can be reduced to approximately as small as 100 µm to eliminate the necessity for performing defoaming under pressure to improve the production efficiency. Thus, with the present manufacturing method, it is possible to prepare an optical disc having superior recording and/or reproducing characteristics.

Referring to Fig. 12, the method of providing the light transmitting sheet 19 with the adhesive layer 20 and subsequently bonding the disc substrate 11 to the light transmitting sheet 19 is explained by referring to Fig.12. First, a sheet material 81, for forming the light transmitting sheet 19 and the adhesive layer 20, is formed, as shown in Fig.12A. This sheet material 81 is formed to an elongate shape, as shown in Fig.12A, and is made up of a light transmitting sheet 82, which proves the light transmitting sheet 19, a pressure-sensitive adhesive 83, provided on the light transmitting sheet 82 to prove the adhesive layer 20, and a release sheet 84 provided on this pressure-sensitive adhesive 83. Referring to Fig.12B, the sheet material 81 is punched by a press device 87 made up of an upper mold 85 and a lower mold 86. This sheet material 81 is formed so that its outer diameter is smaller than the outer diameter of the disc substrate 11 and so that its inner diameter is larger than the inner diameter of the disc substrate 11. Referring to Fig.12C, the release sheet 84, provided on one surface of the pressure-sensitive adhesive 83, is peeled off from the sheet material 81 punched to a ring shape. The one surface of the pressure-sensitive adhesive 83 of the substantially ring-shaped sheet material 81, from which the release sheet 84 has been peeled off, is bonded to the signal recording surface 14 of the disc substrate 11.

Specifically, the substantially ring-shaped sheet material 81, from which the release sheet 84 has been peeled off, is bonded to the disc substrate by the above-described manufacturing device 31. More specifically, the disc substrate 11 is held by the disc holding mechanism 33, with the signal recording surface 14 facing downwards, as shown in Figs.7 and 12D. On the other hand, the sheet material 81 is held by the sheet holding mechanism 32, with the pressure-sensitive adhesive 83 facing upwards, so that the pressure-sensitive adhesive 83 faces the signal recording surface 14 of the disc substrate 11 held by the disc holding mechanism 33. The disc substrate 11 is supported by the supporting pins 46 making up the supporting mechanism 45 of the sheet holding mechanism 32 as a result of movement of the disc holding mechanism 33 in the direction indicated by arrow C in Fig.7. The disc substrate 11 then is thrust and pressure-fitted to the light transmitting sheet 19 as a result of the thrusting member 61 of the thrusting mechanism 34 being moved in the direction indicated by arrow D in Fig.8. That is, the disc substrate 11 is subjected to a thrusting force progressively beginning from the center side towards the outer rim, as a result of which the disc substrate 11 and the light transmitting sheet 19 are unified together to complete the optical disc 1.

Meanwhile, the light transmitting sheet 19 may also be provided on its surface contacting the setting portion 41 of the sheet holding mechanism 32 with a protective sheet 79 through the interposition of the adhesive layer 78 , as shown in Fig.11.

In the above-described manufacturing method for the optical disc, in contradistinction from the manufacturing method for the optical disc 1, described previously, it suffices if the light transmitting sheet 82 provided with the pressure-sensitive adhesive 83 is punched. On the other hand, since it suffices to bond the disc substrate 11 and the light transmitting sheet 82 carrying the pressure-sensitive adhesive 83, only one bonding operation suffices, thus simplifying the production process, thereby improving the production efficiency of the optical disc 1. Moreover, in bonding the light transmitting sheet 19 to the disc substrate 11, the thrusting member 61 formed of an elastic material is used, and the thrusting pressure is applied from the center towards the outer periphery, any air bubble that may be produced on the bonding surface may be extruded towards the outer rim. This enables the air bubble 24 to be reduced in size to as small as approximately 100 μm or less to eliminate the necessity of performing defoaming under pressure to improve the production efficiency. So, with the present manufacturing method, the optical disc 1 can be produced which is superior in recording and/or reproducing properties.

The method for the preparation of the optical disc 1, consisting in providing the adhesive layer 20 on the signal recording surface 4 of the disc substrate 11 and subsequently bonding the disc substrate 11 on the light transmitting sheet 19, and the method for the preparation of the optical disc 1, consisting in providing the adhesive layer 20 on the light transmitting sheet 19 and bonding the disc substrate 11 on this light transmitting sheet 19, have been explained in the foregoing. It is noted that the above-described optical disc manufacturing device 31 is used when providing the adhesive layer 20 on the disc substrate 1 in the manufacturing method for the optical disc 1, described above, when pressure-bonding the light transmitting sheet 19 to the disc substrate provided on the adhesive layer 20, in the firstly-stated optical disc manufacturing method, and also when providing the light transmitting sheet 19 carrying the adhesive layer 20 on the disc substrate 11, in the secondly stated optical disc manufacturing method.

Although the present invention has been described in connection to the manufacturing method and the manufacturing device for the optical disc 1, the present invention is not limited to this merely illustrative embodiment. For example, although the foregoing description is directed to the use of an elastic member, formed of silicon rubber, as the thrusting member 61, the thrusting member 61 is not limited to this configuration. The elastic member may also be a portion of a spherical member without being limited to a semi-spherical shape as used in the foregoing embodiment.

## Claims

1. An optical disc comprising:

   a disc substrate including a center opening and having a signal recording surface on at least one surface thereof, and
   a light transmitting layer provided on said signal recording surface and including a light transmitting sheet and an adhesive layer for bonding said light transmitting sheet to said signal recording surface;
   said light transmitting layer having an outer diameter smaller than the outer diameter of said disc substrate and an inner diameter larger than the inner diameter of said disc substrate, wherein a signal is recorded and/or reproduced from the side light transmitting layer to said signal recording surface.

2. The optical disc according to claim 1 wherein said light transmitting layer is 3 to 177 μm in thickness.

3. An optical disc comprising:

   a disc substrate including a center opening and having a signal recording surface on at least one surface thereof, and
   a light transmitting layer provided on said signal recording surface and including a light transmitting sheet and an adhesive layer for bonding said light transmitting sheet to said signal recording surface;
   said light transmitting layer including an air bubble having a size along the track direction of approximately 100 μm or less, wherein signal is recorded and/or reproduced from the side light transmitting layer to said signal recording surface.

4. An apparatus for the preparation of an optical disc comprising:

   a sheet holding mechanism for holding a light transmitting sheet which is to be bonded to a signal recording surface provided on at least one surface of a disc substrate;
   a disc holding mechanism for holding said disc substrate on said light transmitting sheet held on said sheet holding mechanism so that said signal recording surface will face said light transmitting layer; and
   a thrusting mechanism for thrusting said disc substrate held on said disc holding mechanism against said light transmitting sheet held on said sheet holding mechanism;
said thrusting mechanism progressively thrusting said disc substrate beginning from a center of said disc substrate towards an outer periphery of said disc substrate.

5. The apparatus for the preparation of the optical disc according to claim 4 wherein said thrusting mechanism includes an elastic member being a portion of a sphere, said elastic member progressively thrusting said disc substrate beginning from the center towards an outer periphery of said disc substrate.

6. The apparatus for the preparation of the optical disc according to claim 4 wherein said sheet holding mechanism includes a suction mechanism for holding said light transmitting layer under suction.

7. The apparatus for the preparation of the optical disc according to claim 4 wherein said sheet holding mechanism has a surface roughness Ra smaller than 0.02 μm.

8. The apparatus for the preparation of the optical disc according to claim 4 wherein said light transmitting sheet has an outer diameter smaller than the outer diameter of said disc substrate and an inner diameter larger than the inner diameter of said disc substrate.

9. The apparatus for the preparation of the optical disc according to claim 8 further comprising:

   a supporting mechanism provided on said sheet holding mechanism for supporting said disc substrate supplied from said disc holding mechanism;
   said supporting mechanism including a supporting member for supporting said disc substrate supplied from said disc holding mechanism so that a clearance is formed between said disc substrate and said light transmitting sheet held on said sheet holding mechanism, and a biasing member for biasing said supporting member in a direction of hoisting said disc substrate;
   said supporting member being receded against the force of said biasing member when the disc substrate supported by said supporting member has been thrust up to the outer rim by said thrusting mechanism.

10. The apparatus for the preparation of an optical disc according to claim 9 wherein said supporting member is provided on the outer rim of said light transmitting sheet.

11. The apparatus for the preparation of the optical disc according to claim 9 wherein said light transmitting sheet includes a protective sheet for surface protection on a surface thereof contacting said sheet holding mechanism.

12. A method for the preparation of an optical disc comprising a step of bonding a disc substrate provided with a signal recording surface on at least one surface thereof to a light transmitting sheet with an adhesive layer so that said light transmitting sheet faces said signal recording surface, wherein, in said bonding step, said disc substrate is progressively thrust against the light transmitting sheet beginning from the center towards the outer periphery thereof.

13. The method for the preparation of the optical disc according to claim 12 wherein said bonding step comprises the steps of:

   providing said adhesive layer on said signal recording surface of said disc substrate; and
   bonding said light transmitting sheet through said adhesive layer to said disc substrate.

14. The method for the preparation of the optical disc according to claim 13 wherein said adhesive layer has an outer diameter smaller than the outer diameter of said disc substrate and an inner diameter larger than the inner diameter of said disc substrate.

15. The method for the preparation of the optical disc according to claim 13 wherein said light transmitting sheet has the outer diameter smaller than the outer diameter of said disc substrate and the inner diameter larger than the inner diameter of said disc substrate.

16. The method for the preparation of the optical disc according to claim 12 wherein said bonding step comprises the steps of:

   providing said adhesive layer on a bonding surface of said light transmitting sheet to be bonded to said disc substrate; and
   bonding said light transmitting sheet to said disc substrate through said adhesive layer.

17. The method for the preparation of the optical disc according to claim 16 wherein said light transmitting sheet provided with said adhesive layer has an outer diameter smaller than the outer diameter of said disc substrate and an inner diameter larger than the inner diameter of said disc substrate.

FIG.1

**FIG.2**

**FIG.3**

**FIG.4**

**FIG.5**

**FIG.6**

FIG.7

**FIG.8**

FIG.9

FIG.10A

FIG.10B
PUNCHING

FIG.10C
PET LINER PEEL-OFF

FIG.10D
SETTING

FIG.10E
PAD PRESSURE FITTING

FIG.10F
PET LINER PEEL-OFF

FIG.10G
SETTING

FIG.10H
PAD PRESSURE FITTING

**FIG.11**

PUNCHING

**FIG.12A**　　**FIG.12B**

PET LINER
PEEL-OFF

**FIG.12C**

SETTING

**FIG.12D**

PAD
PRESSURE FITTING

**FIG.12E**